# EUROPEAN PATENT APPLICATION

(11) **EP 4 722 310 A1**
(43) Date of publication of application: **08.04.2026**
(21) Application number: 25206787.1
(22) Date of filing: 06.10.2025
(51) Int. Cl.: C09D 11/38, C09D 11/322

(54) **INKJET INK**

(30) Priority: 07.10.2024 JP 2024175980
(71) Applicant: KYOCERA Document Solutions Inc., Osaka-shi, Osaka 540-8585 (JP)
(72) Inventor: OZAWA, Noriaki, Osaka-shi, Osaka, 540-8585 (JP)
(74) Representative: Viering, Jentschura & Partner mbB Patent- und Rechtsanwälte

(57) **Abstract**

An inkjet ink includes: a pigment; a pigment dispersion resin; and a surfactant represented by the following general formula (1). In the inkjet ink, the number of coarse particles having a particle size of 0.6 µm or more is 1.0 × 10⁹/mL or more and 1.0 × 10¹¹/mL or less. 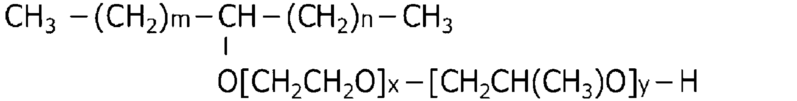 (in the general formula (1), m and n represent positive integers satisfying the following relationship of 9 ≤ m + n ≤ 10 and x and y represent integers satisfying the following relationships of 5 ≤ x ≤ 15, 7 ≤ y ≤ 10, and 1.5 ≤ y / x ≤ 2.0.)

## Description

### Field

The present disclosure relates to an inkjet ink.

### Background

Japanese Patent Application Laid-open No. 2010-024313 and Japanese Patent Application Laid-open No. 2011-236424 disclose an inkjet ink for recording an image on a recording medium such as paper. In inkjet inks, the greater the amount of coarse particles, the more difficult it becomes to achieve a stable ejection property. Meanwhile, in inkjet inks, the more the amount of coarse particles is tried to be reduced, the higher the production cost becomes. In this regard, a technology is known for improving the ejection stability by increasing the surface tension of the inkjet ink without increasing costs.

### Summary

According to an embodiment of the present disclosure, there is provided an inkjet ink, including: a pigment; a pigment dispersion resin; and a surfactant represented by the following general formula (1). In the inkjet ink, the number of coarse particles having a particle size of 0.6 µm or more is 1.0 × 10⁹/mL or more and 1.0 × 10¹¹/mL or less. 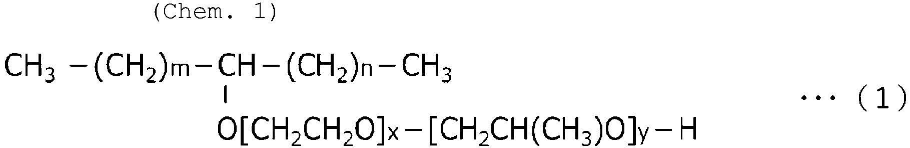 (in the general formula (1), m and n represent positive integers satisfying the following relationship of 9 ≤ m + n ≤ 10 and x and y represent integers satisfying the following relationships of 5 ≤ x ≤ 15, 7 ≤ y ≤ 10, and 1.5 ≤ y / x ≤ 2.0.)

### Detailed Description

In inkjet inks, increasing surface tension makes it difficult to achieve sufficient wet-spreadability on recording media, thereby making it difficult to form high-quality images without gaps. For this reason, in inkjet inks, there is a need for a technology capable of achieving both ejection stability and a wet-spreadability even if some coarse particles remain.

In view of the circumstances as described above, it is an object of the present disclosure to provide a technology capable of achieving both ejection stability and a wet-spreadability in inkjet inks at low cost.

An embodiment of the present disclosure will be described.

### [Configuration of inkjet ink]

### (Schematic configuration)

An inkjet ink according to an embodiment of the present disclosure (hereinafter, referred to simply also as an "ink") includes a pigment a, a pigment dispersion resin b, a surfactant c, and water. The ink according to this embodiment is a water-based ink that is ejected from a recording head of an inkjet recording apparatus onto a recording medium to record an image on the recording medium. The recording medium on which an image is to be recorded by the ink according to this embodiment includes a fiber such as a cellulose fiber. Examples of such a recording medium include plain paper, copy paper, recycled paper, thin paper, and thick paper.

In the ink according to this embodiment, by blending the surfactant c having a specific configuration, it is possible to achieve both ejection stability and a wet-spreadability even in a configuration in which the number of coarse particles is relatively large. In this embodiment, the coarse particles refer to particles having a particle diameter of 0.6 µm or more. Examples of the coarse particles that can be included in the ink include a pigment dispersion in which the pigment a and the pigment dispersion resin b are integrated, an intermediate generated during the process of synthesizing the pigment a, and a catalyst used for synthesizing the pigment a.

In the ink according to this embodiment, the number of coarse particles is 1.0 × 10⁹/mL or more and 1.0 × 10¹¹/mL or less. In the ink according to this embodiment, by setting the number of coarse particles to 1.0 × 10¹¹/mL or less, it becomes easier to achieve high ejection stability. Further, in the ink according to this embodiment, by setting the number of coarse particles to 1.0 × 10⁹/mL or more, it becomes easier to achieve high image density in the image formed on a recording medium. Further, the ink according to this embodiment provides a particularly significant advantage in that it is possible to achieve both ejection stability and a wet-spreadability even in the configuration in which the number of coarse particles is 5.0 × 10¹⁰/mL or more. Details of each component of the ink according to this embodiment will be described below.

### (Pigment a)

The ink according to this embodiment includes the pigment a as a coloring agent from the viewpoints of color mixing prevention and improvement in water resistance in images recorded on the recording medium. The pigment a may be either an inorganic pigment or an organic pigment. Further, as the pigment a, these may be combined with an extender pigment as necessary.

Specific examples of the inorganic pigment that can be used in the ink according to this embodiment include carbon black and a metal oxide. In particular, in the case of a black ink, carbon black is favorable. Examples of the carbon black include furnace black, thermal lamp black, acetylene black, and channel black.

Specific examples of the organic pigment that can be used in the ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalone pigment.

In the ink according to this embodiment, the hue is not particularly limited, and a colored pigment of any of colors such as yellow, magenta, cyan, blue, red, orange, and green can be used. Favorable specific examples of the colored pigment include C.I. Pigment Yellow, C.I. Pigment Red, C.I. Pigment Orange, C.I. Pigment Violet, C.I. Pigment Blue, and C.I. Pigment Green. The ink according to this embodiment can use one or two or more selected from these colored pigments as the pigment a.

### (Pigment dispersion resin b)

The pigment dispersion resin b is fine particles of a resin that is water-soluble and adheres to the surface of the pigment a to suppress the agglomeration of the pigment a. Examples of the pigment dispersion resin b include a copolymer of at least one monomer selected from the group consisting of (meth)acrylic acid alkyl ester, styrene, and vinylnaphthalene and at least one monomer selected from the group consisting of (meth)acrylic acid and maleic acid.

As the pigment dispersion resin b, a resin including a repeating unit derived from (meth)acrylic acid ((meth)acrylic acid unit), a repeating unit derived from (meth)acrylic acid alkyl ester ((meth)acrylic acid alkyl ester unit), and a styrene unit is favorable. In this case, the ratio of the (meth)acrylic acid unit to all repeating units of the pigment dispersion resin b is favorably 4.5 mass% or more and 8.0 mass% or less. The ratio of the (meth)acrylic acid alkyl ester unit to all repeating units of the pigment dispersion resin b is favorably 35 mass% or more and 70 mass% or less. The ratio of the styrene unit to all repeating units of the pigment dispersion resin b is favorably 27 mass% or more and 60 mass% or less. As the pigment dispersion resin b, a resin including a repeating unit derived from methacrylic acid, a repeating unit derived from methyl methacrylate, a repeating unit derived from butyl acrylate, and a styrene unit is more favorable.

In the ink according to this embodiment, the content of the pigment dispersion resin b is favorably 0.5 mass% or more and 8.0 mass% or less, more favorably 1.5 mass% or more and 4.0 mass% or less. By setting the content of the pigment dispersion resin b to 0.5 mass% or more, it is possible to more effectively suppress the agglomeration of the pigment a. By setting the content of the pigment dispersion resin b to 8.0 mass% or less, it is possible to suppress the occurrence of nozzle clogging in the recording head.

### (Surfactant c)

The surfactant c blended in the ink according to this embodiment is represented by the following general formula (1).

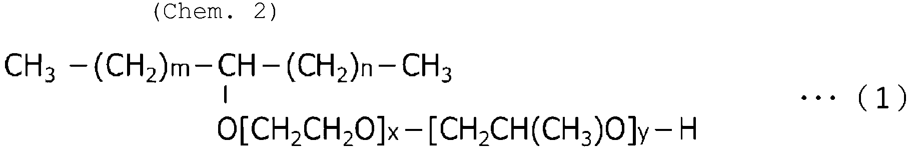

In the general formula (1), m and n represent positive integers satisfying the following relationship of 9 ≤ m + n ≤ 10. Further, x and y represent integers satisfying the following relationships of 5 ≤ x ≤ 15, 7 ≤ y ≤ 10, and 1.5 ≤ y / x ≤ 2.0. "m + n" indicates the amount of a first hydrophobic portion. "x" indicates the amount of a hydrophilic portion. "y" indicates the amount of a second hydrophobic portion. That is, in the ink according to this embodiment, the balance between ejection stability and a wet-spreadability is controlled by the amount of the first hydrophobic portion, the amount of the hydrophilic portion, the amount of the second hydrophobic portion, and the ratio of the hydrophobic portion to the hydrophilic portion in the surfactant c.

### (Water)

In the ink according to this embodiment, ion exchanged water, purified water, distilled water, or the like can be used as water. In the ink according to this embodiment, the content of water is favorably 30 mass% or more and 60 mass% or less from the viewpoints of dryness and ejection reliability.

### (Other components)

In the ink according to this embodiment, components other than the above may be blended as necessary. For example, in the ink according to this embodiment, a surfactant can be used as a dispersant having the effect of enhancing the dispersibility of the pigment a in the solvent. The surfactant blended as a dispersant is blended separately from the surfactant c, and reduces the interfacial tension between the pigment a and the solvent, thereby enhancing the dispersibility of the pigment a in the solvent. As such a surfactant, for example, a non-ionic surfactant or an anionic surfactant can be used.

Further, in the ink according to this embodiment, various additives such as a water-soluble moisturizing agent, a penetrating agent, a dissolution stabilizer, an anti-drying agent, an antioxidant, a viscosity adjustor, a pH adjuster, a neutralizer, and an antifungal agent may be blended as necessary in addition to the surfactant.

### [Examples]

Inks were prepared and evaluated as Examples 1 and 2 of the present disclosure.

### (Preparation of ink)

In Examples 1 and 2, first, a pigment dispersion liquid including the pigment a dispersed in water was prepared. The pigment dispersion liquid was prepared by blending the pigment a, the pigment dispersion resin b, sodium hydroxide, OLFINE (registered trademark) E1010, and water such that the content shown in Table 1 was achieved.

**(Table 1)**

| Component | Content (mass%) |
|---|---|
| Pigment a | 15 |
| Pigment dispersion resin b | 9.0 |
| Sodium hydroxide | 0~1.0 |
| OLFINE E1010 | 0.5 |
| Water | Remainder |

Sodium hydroxide was blended as a neutralizer for neutralizing the pigment dispersion resin b. OLFINE (registered trademark) E1010 is blended as a dispersant for enhancing the dispersibility of the pigment a in the solvent and is a non-ionic surfactant manufactured by Nissin Chemical Co., Ltd. In all of Examples 1 and 2, Pigment Blue 15:3 ("LIONOL BLUE FG-7351" manufactured by Toyocolor Co., Ltd.) was used as the pigment a, benzylmethacrylate/methacrylic acid was used as the pigment dispersion resin b, and ion exchanged water was used as water.

The pigment dispersion liquid was prepared by mixing the above components by wet dispersion using a media-type wet disperser. Examples of the media-type wet disperser include a wet disperser (more specifically, "Nano Grain Mill" manufactured by ASADA IRON WORKS.CO., LTD., "MSC mill" manufactured by NIPPON COKE & ENGINEERING. CO., LTD., "DYNO (registered trademark)-MILL" manufactured by Shinmaru Enterprises Corporation, and the like). In the wet dispersion using a media-type wet disperser, media (zirconia beads having a diameter of 0.5 mm) were set in a vessel and the ejection rate was controlled to 200 g/min or more and 600 g/min or less.

Next, an ink according to Example 1 was prepared. The ink according to Example 1 was prepared by blending the above pigment dispersion liquid, the surfactant c, 3-methyl-1,5-pentanediol, and water such that the content shown in Table 2 was achieved.

**(Table 2)**

| Component | Content (mass%) |
|---|---|
| Pigment dispersion liquid | 53.3 |
| Surfactant c | 0.5 |
| 3-methyl-1,5-pentanediol | 30 |
| Water | Remainder |

In the preparation of the ink according to Example 1, the components shown in Table 2 were added in order while stirring the solvent using a stirrer. Further, each ink after stirring was filtered using a filter (pore size determined for each sample).

Further, an ink according to Example 2 was prepared. The ink according to Example 2 was prepared by blending the above pigment dispersion liquid, the surfactant c, 1,3-propanediol, triethylene glycol monobutyl ether, and water such that the content shown in Table 3 was achieved.

**(Table 3)**

| Component | Content (mass%) |
|---|---|
| Pigment dispersion liquid | 53.3 |
| Surfactant c | 0.7 |
| 1,3-propanediol | 30 |
| Triethylene glycol monobutyl ether | 3.0 |
| Water | Remainder |

In the preparation of the ink according to Example 2, the components shown in Table 3 were added in order while stirring the solvent using a stirrer. Further, each ink after stirring was filtered using a filter having a pore size of φ1 µm.

### (Measurement of number of coarse particles)

In the measurement of the number of coarse particles in each ink, the number of particles with a size of 0.6 µm or more and 200 µm or less was counted using a particle size measurement device "AccuSizer" and a diluted solution obtained by diluting the ink 10000 times. The number of coarse particles obtained by the measurement was converted into the original liquid, i.e., multiplied by 10000 to obtain the number of coarse particles in the ink.

### (Evaluation of ink)

For the inks according to Examples 1 and 2, ejection stability, a wet-spreadability, and image density were evaluated.

### •Method of evaluating ejection stability

In the evaluation of ejection stability, the length of a splash appearing in the image recorded on a recording medium with each ink was measured. That is, for each ink, assuming that a splash was formed by a satellite droplet, it was determined that the shorter the length of the splash, the higher the ejection stability, and the longer the splash, the lower the ejection stability. In the measurement of the length of the splash, an image of a straight line (dot line) was formed on a recording medium ("CC90" manufactured by Mondi plc) using an inkjet recording apparatus ("TASKalfa Pro 15000c" manufactured by KYOCERA Document Solutions Inc.). The length of the splash extending from the dot line in the conveying direction was measured, and the maximum value was used as an evaluation value for ejection stability. Using the evaluation value for ejection stability of each ink, evaluation was performed in accordance with the following criteria A and B. Inks with the evaluation of A for ejection stability are evaluated to "Pass", and inks with the evaluation of B are evaluated to "Fail".
A (Good): 60 µm or less
B (Poor): exceeding 60 µm

### •Method of evaluating wet-spreadability

In the evaluation of a wet-spreadability, images of 10 straight lines (1-dot lines) were formed on a recording medium ("CC90" manufactured by Mondi plc) using an inkjet recording apparatus (line type, manufactured by KYOCERA Document Solutions Inc.) with an ejection rate of 11 pL per dot. Then, the dried images of the straight lines were observed using an optical microscope ("MM-800" manufactured by Nikon Corporation), and the line width of the image of each straight line was measured by the application measurement "Line measurement". For each ink, the average value of the line widths of the images of the 10 straight lines was used as an evaluation value for a wet-spreadability. By using the evaluation value for the wet-spreadability of each ink, the wet-spreadability was evaluated in accordance with the following criteria A and B. Inks with the evaluation for the wet-spreadability of A are evaluated to "Pass", and inks with the evaluation of B are evaluated to "Fail".
A (Good): 80 µm or more
B (Poor): less than 80 µm

### •Method of evaluating image density

A solid image was formed on a recording medium ("CC90" manufactured by Mondi plc) using an inkjet recording apparatus ("TASKalfa Pro 15000c" manufactured by KYOCERA Document Solutions Inc.). Then, the image density of the dried solid image was measured using a spectrodensitometer (FD-5, manufactured by Konica Minolta, Inc.). For each ink, the average value of image densities obtained by the five measurements was used as an evaluation value for image density. For each evaluation value for the image density of each ink, evaluation was performed in accordance with the following criteria A and B. Inks with the evaluation for the image density of A are evaluated to "Pass", and inks with the evaluation of B are evaluated to "Fail".
A (Good): 1.20 or more
B (Poor): less than 1.20

### (Example 1)

In Example 1, ink samples 1 to 5 in which the number of coarse particles included in the ink was varied were prepared by varying the ejection rate during the preparation of the pigment dispersion liquid and the filter pore size during the preparation of the ink in the above method, and the above evaluation was performed on the samples 1 to 5. In all of the samples 1 to 5, a copolymer represented by the general formula (1) (m + n = 10, x = 5, y = 9, y/x = 1.8) was used as the surfactant c.

Table 4 shows the ejection rate during the preparation of the pigment dispersion liquid, the filter pore size during the preparation of the ink, and the number of coarse particles for the samples 1 to 5. In the samples 2 to 4, the number of coarse particles was within a range of 1.0 × 10⁹/mL or more and 1.0 × 10¹¹/mL or less. On the other hand, the number of coarse particles exceeded 1.0 × 10¹¹/mL in the sample 1, and the number of coarse particles was less than 1.0 × 10⁹/mL in the sample 5.

**(Table 4)**

| No. | Ejection rate (g/min) | Filter pore size (*µ*m) | Number of coarse particles (×10⁹/mL) |
|---|---|---|---|
| 1 | 600 | 1.0 | 120 |
| 2 | 400 | 1.0 | 100 |
| 3 | 300 | 1.0 | 50 |
| 4 | 200 | 1.0 | 3 |
| 5 | 200 | 0.5 | 0.6 |

Table 5 shows the evaluation results of ejection stability, a wet-spreadability, and image density for the samples 1 to 5. In all of the samples 2 to 4, ejection stability, a wet-spreadability, and image density were evaluated to "Pass". On the other hand, in the sample 1 in which the number of coarse particles is large, the ejection stability was evaluated to "Fail". Further, in the sample 5 in which the number of coarse particles is low, the image density was evaluated to "Fail".

**(Table 5)**

| No. | Ejection stability | Wet-spreadability | | Image density | |
|---|---|---|---|---|---|
| | Evaluation | Evaluation value (*µ*m) | Evaluation | Evaluation value | Evaluation |
| 1 | B | 83.0 | A | 1.24 | A |
| 2 | A | 84.0 | A | 1.22 | A |
| 3 | A | 83.0 | A | 1.21 | A |
| 4 | A | 84.0 | A | 1.20 | A |
| 5 | A | 83.0 | A | 1.18 | B |

### (Example 2)

In Example 2, ink samples 6 to 15 were prepared using surfactants c with various values of m + n, x, y, and y/x in the general formula (1) by the above method, and the above evaluation was performed on the samples 6 to 15. In all of the samples 6 to 15, the number of coarse particles was within a range of 1.0 × 10⁹/mL or more and 1.0 × 10¹¹/mL or less. Table 6 shows m + n, x, y, and y/x in the surfactant c used in the samples 6 to 15. All of the samples 7 and 10 had the configuration in the above embodiment. On the other hand, m + n is less than 9 in the samples 12 and 14, and m + n exceeds 10 in the samples 11, 13, and 15. Further, x is less than 5 in the samples 6 and 11, and y exceeds 10 in the samples 8, 9, 13, and 15. Further, y/x exceeds 2.0 in the sample 15.

**(Table 6)**

| No. | Surfactant c | | | |
|---|---|---|---|---|
| | m+n | x | y | y/x |
| 6 | 10 | 4 | 7 | 1.75 |
| 7 | 10 | 5 | 10 | 2.00 |
| 8 | 9 | 7 | 12 | 1.71 |
| 9 | 9 | 6 | 11 | 1.83 |
| 10 | 9 | 5 | 8 | 1.60 |
| 11 | 12 | 4 | 7 | 1.75 |
| 12 | 8 | 5 | 10 | 2.00 |
| 13 | 13 | 6 | 12 | 2.00 |
| 14 | 8 | 7 | 9 | 1.29 |
| 15 | 12 | 6 | 13 | 2.17 |

Table 7 shows the evaluation results of ejection stability, a wet-spreadability, and image density for the samples 6 to 15. In all of the samples 7 and 10, ejection stability, a wet-spreadability, and image density were evaluated to "Pass". On the other hand, in the samples 6, 8, 9, and 11 to 15, at least one of ejection stability, a wet-spreadability, or image density was evaluated to "Fail".

**(Table 7)**

| No. | Ejection stability | Wet-spreadability | | Image density | |
|---|---|---|---|---|---|
| | Evaluation | Evaluation value (*µ*m) | Evaluation | Evaluation value | Evaluation |
| 6 | A | 78 | B | 1.24 | A |
| 7 | A | 84 | A | 1.22 | A |
| 8 | B | 83 | A | 1.21 | A |
| 9 | B | 84 | A | 1.20 | A |
| 10 | A | 82 | A | 1.23 | A |
| 11 | B | 83 | A | 1.22 | A |
| 12 | A | 84 | A | 1.19 | B |
| 13 | B | 83 | A | 1.23 | A |
| 14 | A | 76 | B | 1.16 | B |
| 15 | B | 82 | A | 1.21 | A |

## Claims

1. An inkjet ink, comprising:
a pigment;
a pigment dispersion resin; and
a surfactant represented by the following general formula (1),
the number of coarse particles having a particle size of 0.6 µm or more being 1.0 × 10⁹/mL or more and 1.0 × 10¹¹/mL or less: 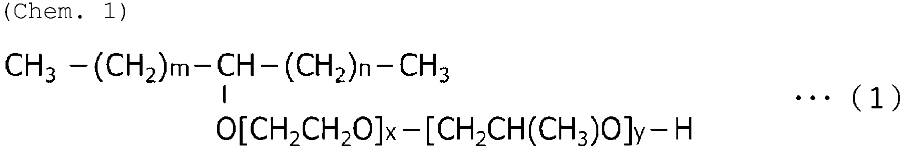 (wherein, in the general formula (1), m and n represent positive integers satisfying the following relationship of 9 ≤ m + n ≤ 10 and x and y represent integers satisfying the following relationships of 5 ≤ x ≤ 15, 7 ≤ y ≤ 10, and 1.5 ≤ y / x ≤ 2.0).

2. The inkjet ink according to claim 1, wherein
the number of coarse particles is 5.0 × 10¹⁰/mL or more.
